# EUROPEAN PATENT APPLICATION

(11) **EP 3 023 265 A1**
(43) Date of publication of application: **25.05.2016**
(21) Application number: 14826503.6
(22) Date of filing: 30.05.2014
(51) Int. Cl.: B60C 9/11, B60C 9/00, D04C 1/06, D04C 1/12, D04G 1/00, B60C 9/18

(54) **REINFORCING MEMBER FOR TIRE, AND TIRE USING SAME**

(30) Priority: 17.07.2013 JP 2013148424
(71) Applicant: Bridgestone Corporation, Tokyo 104-8340 (JP)
(72) Inventor: MIYAZONO Toshiya, Kodaira-shi Tokyo 187-0031 (JP)
(74) Representative: Oxley, Robin John George
(86) International application number: PCT/JP2014/064500
(87) International publication number: WO 2015/008547

(57) **Abstract**

It is an object to provide a reinforcing member for a tire that can further improve tire durability by enhancing durability of members themselves used for a tire reinforcement use, and a tire in which durability is further improved by using this reinforcing member for a tire.

The reinforcing member for a tire includes a network structure made of a plurality of reinforcing materials, in which the network structure is made of a knotted net or a knotless net. The tire is reinforced by this reinforcing member for a tire.

## Description

### TECHNICAL FIELD

The present invention relates to a reinforcing member for a tire (hereinafter also simply referred to as "reinforcing member") and a tire using the same, and more particularly to a reinforcing member for a tire that is related to an improvement of a member structure and a tire using the same.

### BACKGROUND ART

With respect to reinforcing members for a tire, various studies have been conventionally conducted. For example, as reinforcing structures for a tire for a passenger vehicle, a structure in which two or more belt intersecting layers in which cord directions of reinforcing cords intersect each other are arranged on an outer side of a crown portion of a carcass that serves as a frame member in a tire radial direction is commonly known.

Moreover, for example, Patent Document 1 discloses a radial tire for a motorcycle in which a belt is configured to include a network body including a first belt cord array body and a second belt cord array body that intersect each other, and each of intersection portions of belt cords is fused in order to maintain conventional properties while preventing occurrence of damages starting from a belt end and improving high speed durability and processability.

### RELATED ART DOCUMENT

### PATENT DOCUMENT

Patent Document 1: Japanese Unexamined Patent Application Publication No. 2012-192789 (claims, etc.)

### SUMMARY OF THE INVENTION

### PROBLEMS TO BE SOLVED BY THE INVENTION

However, as in Patent Document 1, in a structure in which the intersection portions of the belt cords are fixed by fusion, when an angle between the belt cords intersecting each other changes during rolling of a tire, stress concentration occurs at the intersection portions, and the belt cords may be broken due to repeated fatigue. Accordingly, achieving a tire in which problems of such breakage of belt cords are solved and tire durability is further improved has been desired.

Thus it is an object of the present invention to provide a reinforcing member for a tire that can further improve tire durability by solving the above problems and enhancing durability of members themselves, and a tire in which durability is further improved by using the same.

### MEANS FOR SOLVING THE PROBLEMS

As a result of intensive studies, the present inventor has found out that a reinforcing member for a tire that includes a network structure in which knots are formed without chemical bonding, such as fusion, allows the above problems to be solved, thereby completing the present invention.

Specifically, the reinforcing member for a tire according to the present invention is a reinforcing member for a tire that includes a network structure made of a plurality of reinforcing materials, in which the network structure is made of a knotted net or a knotless net.

In the reinforcing member according to the present invention, it is preferable that the network structure is made of the knotted net in which the different reinforcing materials are tied to each other, whereby a knot is formed. Moreover, in the reinforcing member according to the present invention, it is also preferable that the reinforcing materials are formed by twisting a plurality of reinforcing cords together, and the network structure is made of the knotless net in which the reinforcing cords that form the different reinforcing materials are twisted together, whereby a knot is formed.

Moreover, the tire according to the present invention is reinforced by the above reinforcing member for a tire according to the present invention.

### EFFECTS OF THE INVENTION

According to the present invention, durability of members themselves can be enhanced by employing the above configuration, and a tire in which tire durability is further improved can be achieved by using the same.

### BRIEF DESCRIPTION OF THE DRAWINGS

Fig. 1 is an explanatory diagram illustrating a configuration example of a reinforcing member for a tire according to the present invention.
Fig. 2 is an explanatory diagram illustrating another configuration example of the reinforcing member for a tire according to the present invention.
Fig. 3 is a widthwise cross-sectional view illustrating a configuration example of a tire according to the present invention.

### MODE FOR CARRYING OUT THE INVENTION

Hereinafter, embodiments of the present invention will be described in detail with reference to the drawings.

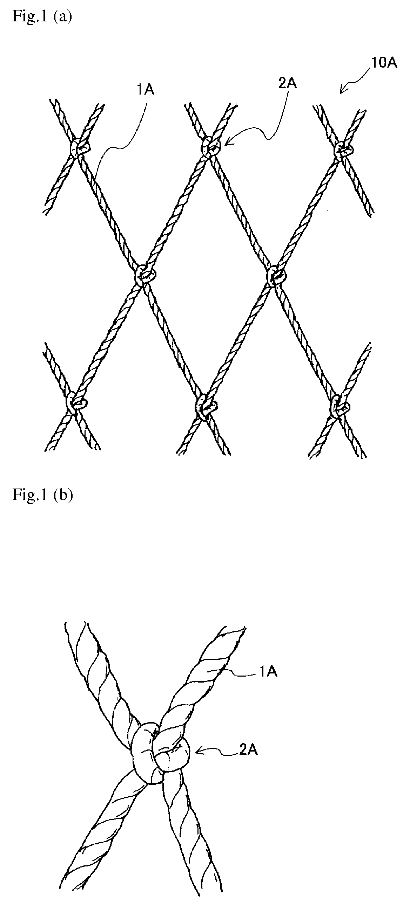

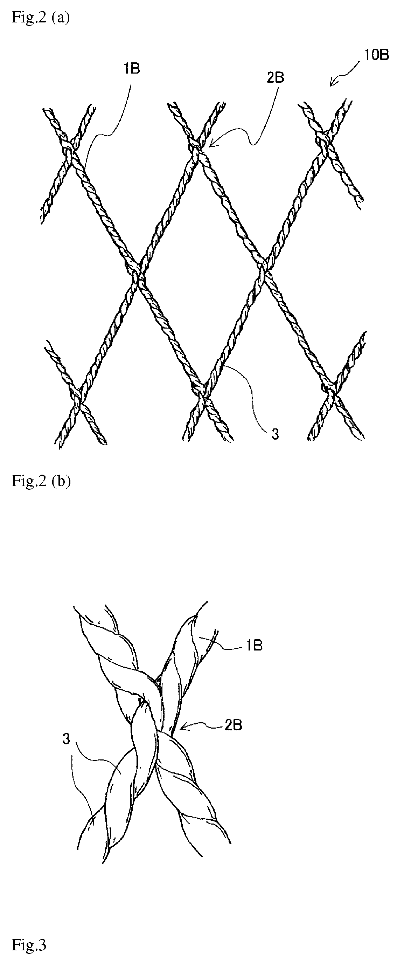

Figs. 1 and 2 are each an explanatory diagram illustrating a configuration example of a reinforcing member for a tire according to the present invention, in which a part of each of reinforcing members is taken out to be illustrated in (a); and portions of knots of each of the reinforcing members are illustrated in an enlarged manner in (b). As illustrated, reinforcing members for a tire 10A, 10B according to the present invention include a network structure made of a plurality of reinforcing materials 1A, 1B, respectively.

The reinforcing members for a tire 10A, 10B according to the present invention are characterized in that the network structure is made of a knotted net or a knotless net. In a tire using the reinforcing members for a tire according to the present invention, a shearing force between belt layers as in usual belt intersecting layers is not generated so that durability and the like are improved. Moreover, different from belt layers including a conventional structure in which intersection portions are fixed by chemical bonding, such as fusion, the reinforcing members for a tire 10A, 10B according to the present invention include the network structure made of a knotted net or a knotless net, and reinforcing materials 1A, 1B are bonded to each other not by being fixed by fusion or the like but by being bound to each other respectively at knots 2A, 2B corresponding to respective portions at which the reinforcing materials 1A, 1B intersect each other. Accordingly, bend distortions of the reinforcing materials 1A, 1B at respective portions other than the knots 2A, 2B allow a movement of changes in an angle between belt cords due to rolling of a tire to be absorbed, and stress fails to concentrate on the reinforcing materials 1A, 1B at the knots 2A, 2B, respectively. Consequently, in comparison with the conventional structure, a fatigue strength of the reinforcing materials 1A, 1B can be maintained so that durability is improved, thereby enabling suppression of occurrence of fatigue breakage.

The reinforcing member 10A according to an embodiment of the present invention as illustrated in Fig. 1 includes the network structure made of a knotted net in which the different reinforcing materials 1A are tied to each other, whereby the knot 2A is formed. A method of tying the reinforcing materials 1A to each other in this case is not particularly limited and may be any tying method generally known. In this manner, the network structure is formed while the plurality of reinforcing materials 1A are bound to each other by the knots, thereby enabling suppression of occurrence of breakage due to stress concentration as in a case of a network structure in which fusion is performed.

The reinforcing member 10B according to another embodiment of the present invention as illustrated in Fig. 2 includes the network structure made of a knotless net in which the reinforcing materials 1B in which a plurality of reinforcing cords 3 are twisted together are used, and the reinforcing cords 3 that form the different reinforcing materials 1B are twisted together, whereby the knot 2B is formed. In the embodiment as illustrated, two pieces of the reinforcing materials 1B, in each of which two pieces of the reinforcing cords 3 are twisted together, are twisted together at the knot 2B in such a manner that one piece of the reinforcing cords 3 that form one of the reinforcing materials 1B penetrates each other between the reinforcing cords 3 that form the other one of the reinforcing materials 1B, thereby being bonded to each other. Also in this case, the network structure is formed while the plurality of reinforcing materials 1B are bound to each other by being twisted together, thereby enabling suppression of occurrence of breakage due to stress concentration as in a case of a network structure in which fusion is performed.

As the reinforcing materials 1A, 1B that respectively form the reinforcing members 10A, 10B according to the present invention, a monofilament made of various types of organic fibers or metal materials that is usually used for a use of reinforcing members for a tire and a twisted cord in which the plurality of monofilaments are appropriately twisted together may be used. Examples of such organic fibers may include nylon, aramid fiber, polyester, and the like. Moreover, examples of the metal materials may include steel, and the like.

In particular, as the reinforcing materials 1B, materials in which the plurality of reinforcing cords 3 are twisted together are used. Also with respect to the reinforcing cords 3 in this case, a monofilament similar to that as described above and a twisted cord in which the plurality of monofilaments are appropriately twisted together may be used. Meanwhile, a number of the reinforcing cords 3 that form the reinforcing materials 1B may be two or more, for example, three to six.

As the reinforcing materials 1A, 1B, in a case of the organic fibers, for example, materials having a total fineness of 1100-3300 dtex may be used, and in a case of the metal materials, for example, materials having a diameter of 0.1-6.0 mm may be used. Meanwhile, an implantation number of the reinforcing materials 1A, 1B respectively in the reinforcing members 10A, 10B may be, for example, 8-80 pieces/50 mm in a direction orthogonal to an arrangement direction of the reinforcing materials.

The reinforcing members according to the present invention may be subjected to adhesive agent treatment in a case in which the reinforcing materials are made of the organic fibers or subjected to plating treatment in a case in which the reinforcing materials are made of the metal materials so as to be provided for manufacturing a tire while covered with a rubber. These adhesive agent treatment and the plating treatment may be performed in accordance with a conventional method, may be performed after the reinforcing members are manufactured, and may be performed during a step of the reinforcing members or the reinforcing cords.

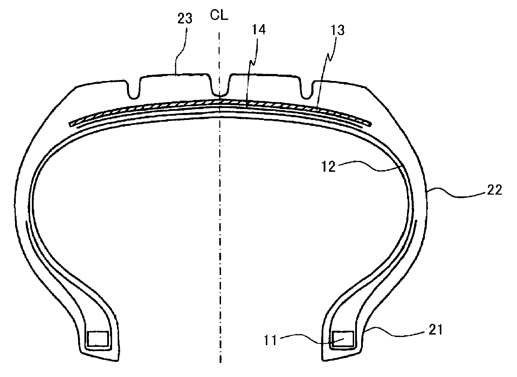

Fig. 3 is a widthwise cross-sectional view illustrating a configuration example of a tire according to the present invention. The tire as illustrated includes a frame that is a carcass 12 toroidally extending between bead cores 11 correspondingly embedded in a pair of bead portions 21. Meanwhile, a pair of side wall portions 22 are correspondingly arranged on an outer side of the pair of bead portions 21 in a tire radial direction, and a tread portion 23 that forms a ground contact surface is arranged between the pair of side wall portions 22.

The tire according to the present invention may be any one as long as the tire is reinforced by the above reinforcing members according to the present invention and thereby obtains an effect of improving durability, and is not particularly limited except an arrangement location of the reinforcing members or the like. For example, in an embodiment as illustrated, one piece of the reinforcing members 13 in place of a conventional intersecting belt layer is arranged on an outer side of a crown portion of the carcass 12 in the tire radial direction. According to the present invention, the above reinforcing members in place of a conventional intersecting belt layer is applied in this manner, whereby an reinforcement effect that has been conventionally obtained due to two pieces of intersecting belt layers can be obtained due to one piece of the above reinforcing members, and durability can be also improved.

The reinforcing members 13 may be disposed at a number of one piece or more, for example, 2-15 pieces. Moreover, in this case, as illustrated, a belt reinforcing layer 14 made of a rubberized layer having reinforcing cords in which a cord direction substantially corresponds to a tire circumferential direction may be further disposed on an inner side of the reinforcing members 13 in the tire radial direction.

The reinforcing members according to the present invention includes the network structure and the reinforcing materials are not fixed each other at knots so that an angle formed between the reinforcing materials can be flexibly determined, in other words, two reinforcement directions in a tire can be optionally selected. An arrangement direction of the reinforcing materials while the reinforcing members according to the present invention are arranged on a tire is not particularly limited and may fall, for example, in a range of 5-65° relative to the tire circumferential direction.

The reinforcing members according to the present invention are not limited to the embodiments as illustrated, and may be arranged as an additional reinforcing layer on the side wall portions 22 and/or the bead portions 21. Durability of the members themselves is excellent also in this case, whereby a reinforcement effect can be obtained due to arrangement of the members without impairing tire durability.

The present invention may be applied to, in addition to a tire for a passenger vehicle as illustrated, any type of tires, such as a heavy duty tire that is applied to a heavy duty vehicle, such as a truck and a bus.

### EXAMPLES

Hereinafter, the present invention will be described further in detail with reference to Examples.

### (Examples 1-3)

A belt structure as indicated in the below table was applied on the outer side of the crown portion of the carcass in the tire radial direction so as to manufacture a tire for a passenger vehicle in each Example. The obtained sample tire in each Example was filled with a standard internal pressure, loaded with 130% of a standard load, and made to travel at a room temperature of 38°C and a speed of 65 km/h, and a travel distance until occurrence of a trouble caused by the intersection portions (knots) of the network structure was measured.

In Example 1, a tire in which as a belt structure, one layer of a thin plate metal net (in which a cylindrical stainless plate having a thickness of 0.14 mm, a width of 200 mm, and a circumference length of 1040 mm was provided with 1320 pieces of elliptical opening portions having a long diameter of 15 mm and a short diameter of 4 mm) in place of one layer of the reinforcing members including the network structure was applied was employed as a conventional example, while, in Examples 2 and 3, a tire in which as a belt structure, three layers of network structures in which knots were formed by fusion (similar to each Example in terms of material of reinforcing members, cord diameter or fineness, implantation number, and cord angle) in place of three layers of the reinforcing members including the network structure were applied was employed as a conventional example, and a ratio (Example/conventional example) of a travel distance of the tire in each Example relative to a travel distance of the tire in each conventional example was determined.

### (Example 4)

A belt structure as indicated in the below table was applied on the outer side of the crown portion of the carcass in the tire radial direction so as to manufacture a tire for a heavy duty vehicle in each Example. The obtained sample tire in each Example was filled with a standard internal pressure, loaded with 150% of the standard load, and made to travel at a room temperature of 38°C and a speed of 72 km/h, and a travel distance until occurrence of a trouble caused by the intersection portions (knots) of the network structure was measured. A tire in which as a belt structure, three layers of thin plate metal nets (in which a cylindrical stainless plate having a thickness of 0.5 mm, a width of 220 mm, and a circumference length of 3095 mm was provided with 3930 pieces of elliptical opening portions having a long diameter of 18 mm and a short diameter of 6 mm) in place of three layer of the reinforcing members including the network structure were applied was employed as a conventional example, and a ratio (Example/conventional example) of a travel distance of the tire in the Example relative to a travel distance of the tire in the conventional example was determined.

Results of these are collectively indicated in the below table. It is indicated that the greater the ratio of the travel distance is, the more durability is improved with respect to the conventional example.

**[Table 1]**

| | Tire size | Belt structure | Material of reinforcing member | Type of network structure | Implantation number (pieces/50 mm) | Angle relative to tire circumferential direction (°) | Travel distance (ratio) |
|---|---|---|---|---|---|---|---|
| Example 1 | PSR 255/35R20 | One layer of network sructure^{*1} | Steel | Knotless | 32 | 20 | 1.3 |
| Example 2 | PSR 155/65R13 | Three layers of network structure^{*2} | Aramid | Knotted | 36 | 45 | 1.2 |
| Example 3 | PSR 155/65R13 | Three layers of network structure and one reinforcing layer of 90°^{*3} | Polyester | Knotted | 50 | 45 | 1.25 |
| Example 4 | TBR 11R22.5 | Three layers of network structure and two reinforcing layers of 90°^{*4} | Steel | Knotless | 21 | 45 | 1.3 |

| | | | | | | | |
|---|---|---|---|---|---|---|---|
| *1) A belt structure having one layer of the reinforcing members of the network structure (see Fig. 2) made of steel cords (structure in which two monofilaments having a cord diameter of 0.35 mm were twisted together). *2) A belt structure having three layers of the reinforcing members of the network structure (see Fig. 1) made of aramid cords (fineness: 1670 dtex/ 2 pieces). *3) A belt structure having three layers of the reinforcing members of the network structure (see Fig. 1) made of polyester cords (fineness: 1670 dtex/ 2 pieces) and one layer of a reinforcing layer made of reinforcing cords (material: steel, diameter: 0.6 mm) having a cord angle of 90° relative to a tire width direction that were arranged on an inner side in a tire radial direction thereof. *4) A belt structure having three layers of the reinforcing members of the network structure (see Fig. 2) made of steel cords (structure in which two monofilaments having a cord diameter of 0.6 mm were twisted together) and two layers of reinforcing layers made of reinforcing cords (material: steel, diameter: 1.2 mm) having a cord angle of 90° relative to a tire width direction that were arranged on an inner side in a tire radial direction thereof. | | | | | | | |

As known from the results in the above table, in the tire in each Example in which the reinforcing members including the network structure made of a knotted net or a knotless net, it is clear that durability is improved in comparison with the conventional examples.

### DESCRIPTION OF SYMBOLS

- 1A, 1B: Reinforcing material
- 2A, 2B: Knot
- 3: Reinforcing cord
- 10A, 10B: Reinforcing member
- 11: Bead core
- 12: Carcass
- 13: Reinforcing member
- 14: Belt reinforcing layer
- 21: Bead portion
- 22: Side wall portion
- 23: Tread portion

## Claims

1. A reinforcing member for a tire, comprising a network structure made of a plurality of reinforcing materials,
wherein the network structure is made of a knotted net or a knotless net.

2. The reinforcing member for a tire according to claim 1,
wherein the network structure is made of the knotted net in which the different reinforcing materials are tied to each other, whereby a knot is formed.

3. The reinforcing member for a tire according to claim 1,
wherein the reinforcing materials are formed by twisting a plurality of reinforcing cords together, and the network structure is made of the knotless net in which the reinforcing cords that form the different reinforcing materials are twisted together, whereby a knot is formed.

4. A tire reinforced by the reinforcing member for a tire according to claim 1.
